# EUROPÄISCHE PATENTSCHRIFT

(11) **EP 0 951 774 B1**
(45) Veröffentlichungstag und Bekanntmachung des Hinweises auf die Patenterteilung: **25.10.2000**
(21) Anmeldenummer: 96942234.4
(22) Anmeldetag: 23.12.1996
(51) Int. Cl.: H04M 3/50, H04Q 7/22

(54) **VERFAHREN UND SYSTEM ZUR ÜBERMITTLUNG VON AUFTRÄGEN IN EINEM TELEKOMMUNIKATIONSNETZ**
PROCESS AND SYSTEM FOR TRANSMITTING ORDERS OVER A TELECOMMUNICATION NETWORK
PROCEDE ET SYSTEME DE TRANSMISSION DE COMMANDES PAR UN RESEAU DE TELECOMMUNICATIONS

(43) Veröffentlichungstag der Anmeldung: 27.10.1999
(73) Patentinhaber: Swisscom AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: CH9600464
(87) Internationale Veröffentlichungsnummer: WO9828900

(56) Entgegenhaltungen:
- WO-A-90/11661
- US-A- 4 071 698
- US-A- 4 797 913
- US-A- 5 181 238
- US-A- 5 345 501
- PATENT ABSTRACTS OF JAPAN vol. 013, no. 097 (E-723), 7.März 1989 & JP 63 269856 A (PIONEER ANSWERPHONE MFG CORP), 8.November 1988,

## Beschreibung

Die vorliegende Erfindung betrifft ein Verfahren und ein System zur Uebermittlung von Aufträgen in einem Telekommunikationsnetz, insbesondere zur Uebermittlung von Produktbestellungen, Informationsanforderungen oder Zahlungstransaktionen, zwischen einer Vielzahl von Abonnenten am Telekommunikationsnetz und mindestens einem Lieferanten. Die Erfindung betrifft insbesondere, aber nicht ausschliesslich, die Uebermittlung von Aufträgen in einem Mobilfunknetz.

Gemäss dem bisherigen Stand der Technik werden Aufträge in einer transparenten Art durch das Telekommunikationsnetz übermittelt, wie jede andere Meldung auch. Die gewohnte Methode für einen Kunden, der ein Produkt bestellen, eine Information anfordern oder eine Zahlungstransaktion durchführen möchte, beruht auf dem Senden einer Meldung an den Lieferanten. Diese Meldung muss eine Beschreibung des zu bestellenden Produkts bzw. des Objekts der Zahlungstransaktion sowie die Identifizierungskoordinaten des Kunden wie Name, Adresse und eventuell Telefonnummer, Telefaxnummer und e-mail-Adresse enthalten, um dem Lieferanten das Senden der verlangten Produkte oder Informationen zu ermöglichen. Damit der Auftrag an den richtigen Lieferanten übermittelt wird, muss der Abonnent noch die kompletten Koordinaten des gewählten Lieferanten eingeben, zum Beispiel die vollständige Adresse, oder, je nach Typ des beanspruchten Kommunikationsnetzes, seine Telefonnummer, seine Telefaxnummer oder z.B. e-mail-Adresse. Dieses Verfahren ist daher ziemlich langwierig und mühsam. Ausserdem können eventuelle, durch den Kunden eingebrachte oder durch Probleme mit der Uebermittlung im Telekommunikationsnetz auftretende Fehler nicht leicht ausfindig gemacht werden. Daraus resultiert eine gewichtige Prozentzahl von Aufträgen, die nicht ausgeführt werden können, da z.B. die Angaben vom Kunden unvollständig oder fehlerhaft eingegeben worden sind.

Das Dokument US-A-4797913 beschreibt ein Verfahren, um Produkte bei einem Lieferanten zu bestellen. Eine Bestellungsdienstzentrale (14) wird einer Interexchange Carrier Nummer zugeordnet. Verschiedene Lieferanten können diesen Dienst abonnieren; jeder bekommt eine oder mehrere Nummern, die einem oder mehreren angebotenen Produkten zugeordnet werden können. Eine ähnliche Lösung wird auch in WO90/11661 beschrieben.

Da freie Telefonnummern eine teueres Gut sind, können diese Systeme nur zum Anbieten von einer begrenzten Anzahl von Produkten eingesetzt werden. Ausserdem bekommt der Lieferant bei einer Bestellung nur die Telefonnummer (ANI-Information) des anrufenden Kundens; um das Produkt zu liefern und eine Rechnung zu erstellen braucht er aber zusätzliche Angaben wie zum Beispiel die Adresse des Kunden, die jeder Lieferant in einer eigenen Datenbank speichern muss.

US-A-5345501 beschreibt ein Verfahren, um Produkte mit Hilfe eines Sprachservers zu bestellen. Ein Sprachmenu erlaubt es dem Kunden, gewünschte Produkte zu bestellen, wobei das Menu mit Sprachbefehlen oder mit einer Tastatur gesteuert wird. Die Lieferanten haben die Möglichkeit, eine Liste von Kunden in einem mit dem Sprachserver verbundenen Computer abzulegen. Dieses Verfahren ist sowohl für Kunden als auch für Lieferanten ziemlich umständlich.

Eine Aufgabe der vorliegenden Erfindung ist es, ein Verfahren oder System vorzuschlagen, das erlaubt, die Probleme bei der Übermittlung von Aufträgen in einem Telekommunikationsnetz zu lösen.

Eine weitere Aufgabe der vorliegenden Erfindung ist es, ein Verfahren oder System zur Übermittlung von Aufträgen, insbesondere von Produktbestellungen, Informationsanforderungen oder Zahlungstransaktionen in einem Telekommunikationsnetz, zu schaffen, das einfacher und zuverlässiger ist.

Gemäss der vorliegenden Erfindung werden diese Ziele insbesondere durch die Elemente des kennzeichnenden Teils der unabhängigen Ansprüche 1 und 12 erreicht. Weitere vorteilhafte Ausführungsformen gehen ausserdem aus den abhängigen Ansprüchen und der Beschreibung hervor.

Im besonderen werden diese Ziele dadurch erreicht, dass die Auftragskurzmeldungen nicht lediglich als transparente Bitströme durch das Telekommunikationsnetz übermittelt werden, sondern sie werden mit den Abonnentenidentifikationsdaten aus der Telekommunikationsnetz-Abonnentendatenbank verknüpft.

Die vorliegende Erfindung lässt sich auf ein Telekommunikationsnetz anwenden, in welchem die Identität der anrufenden Abonnenten bei jedem Anruf durch die Betriebszentrale erkannt wird. Dies ist namentlich beim Mobilfunknetz, das nach dem GSM-Standard arbeitet, oder bei Telekommunikationssystemen - z.B. im Internet oder bei anderen on-line-Kommunikationssystemen - bei denen sich der Anrufer mit einem Identifikationscode und meistens einem Passwort bei der Aufnahme der Verbindung identifiziert, der Fall. In der Zukunft wird dies auch in einem fixen Telekommunikationsnetz, das Abonnenten unabhängig von Geräten identifiziert - z.B. UPT (Universal Personal Telecommunication) - der Fall sein. Gemäss der vorliegenden Erfindung ist die Identität des erkannten Anrufers mit der vom Abonnenten gesandten Auftragssendung im Telekommunikationsnetz verknüpft. Der Abonnent muss sich also nicht erneut beim Lieferanten identifizieren.

Das Telekommunikationsnetz beinhaltet eine Abonnentendatenbank mit allen Abonnenten des Telekommunikationsnetzes oder eines Dienstes im Telekommunikationsnetz. Diese Datenbank enthält Identifizierungsangaben der Abonnenten, z.B. die Adresse und die Sprache des Abonnenten. In einem gut verwalteten Telekommunikationsnetz sind diese Angaben normalerweise äusserst zuverlässig und genau. Wenn der Abonnent dem Lieferanten eine Auftragskurzmeldung senden möchte, werden einige dieser Abonnentenidentifikationsdaten mit der vom Abonnenten gesandten Auftragsmeldung verknüpft. Der Abonnent muss sich also nicht mit der präzisen Erfassung der Gesamtheit der Identifikationsdaten befassen, die es dem Lieferanten ermöglichen, die angeforderten Produkte oder Informationen zu liefern: das Telekommunikationsnetz liefert diese Angaben von seiner Abonnentendatenbank aus.

Vorteilhafterweise beinhaltet das Telekommunikationsnetz ebenfalls eine Lieferantendatenbank mit allen am System interessierten Lieferanten. Für jeden eingetragenen Lieferanten umfasst die Lieferantendatenbank Lieferantenidentifikationsdaten, die mindestens die Adresse des Lieferanten enthalten. Es genügt daher, wenn der Abonnent die zur Uebermittlung seines Auftrages an den Lieferanten nötigen Identifikationsdaten eingibt: die anderen Lieferantenidentifikationsdaten werden vom System der Lieferantendatenbank entnommen.

Im Laufe der Beschreibung und der Ansprüche versteht man unter dem Begriff "Lieferant" z.B. einen Waren- oder Informationslieferanten, vor allem im Falle einer Produktbestellung oder Informationsanforderung. Im Falle einer Zahlungstransaktion versteht man unter "Lieferant" z.B. eher irgendeinen Lieferanten oder Anbieter, an den die Transaktion gerichtet ist.

Vorteilhafterweise enthält die vom Abonnenten eingegebene und vom Telekommunikationsnetz übermittelte Kurzmeldung eine Checksumme. Das Telekommunikationssystem enthält Mittel, um die Checksumme aus mindestens einigen Teilen der erhaltenen Kurzmeldung wiederherzustellen. Die berechnete Checksumme wird mit der übermittelten Checksumme verglichen. Wenn sich der Vergleich als negativ erweist, sendet das Kommunikationsnetz dem Abonnenten eine Kurzmeldung mit der Aufforderung zur Korrektur. Bei einer Variante wird die Verbindung unterbrochen, wenn sich der Vergleich als negativ erweist. Bei der anderen Variante erlaubt die Checksumme die Fehlerkorrektur in der Kurzmeldung und das Telekommunikationsnetz korrigiert die fehlerhaften Kurzmeldungen wenn sich der Vergleich als negativ erweist.

Die in der Abonnentendatenbank enthaltenen und mit der Auftragsmeldung verknüpften Abonnentenidentifkationsdaten enthalten mindestens die Adresse des Abonnenten. Vorzugsweise enthalten diese Abonnentenidentifkationsdaten ebenfalls andere Angaben über den Abonnenten, z.B. die Sprache des Abonnenten, eine Rechnungsadresse, seine Bankverbindung usw.

Die von den Abonnenten eingegebenen Kurzmeldungen können ein Feld aufweisen, das die Art des Auftrages anzeigt. Z.B. können die Kurzmeldungen ein Feld enthalten, das anzeigt, ob es sich um eine Produktbestellung, eine Informationsanforderung oder eine Zahlungstransaktion handelt. Wenn das Feld anzeigt, dass der Abonnent ein Produkt zu bestellen wünscht, sendet die Betriebszentrale dem Abonnenten durch das Telekommunikationsnetz eine Bestätigungs-Kurzmeldung. Die Verbindung wird unterbrochen, wenn die Betriebszentrale keine Antwort erhält oder wenn sie eine Kurzmeldung zur Annullierung der Bestellung oder Transaktion erhält.

Im ersten bevorzugten Beispiel wird das Telekommunikationsnetz durch ein Mobilfunknetz, z.B. durch ein Mobilfunknetz, das nach dem GSM-Standard arbeitet, gebildet. In diesem Fall umfassen die Kurzmeldungen einen Datenvorsatz (Header) und ein Datentelegramm. Die Identifizierung des Abonnenten ist im Datenvorsatz, z.B. gemäss GSM-Standard 4.08, oder gemäss einem darauf basierenden, erweiterten Standard definiert. Die Identifizierung des Produkts und des Lieferanten ist im Datentelegramm enthalten.

In einem zweiten Beispiel wird das Telekommunikationsnetz durch ein Telekommunikationsnetz gebildet, in welchem sich die Anrufer bei jeder Verbindungsaufnahme selbst identifizieren - z.B. ein Netz gemäss Internet-Standard oder ein anderes on-line-Telekommunikationsnetz.

Im folgenden ist die Erfindung anhand von Figuren näher beschrieben. Es zeigen:
Fig. 1 den Vorgang einer Auftragsübermittlung
Fig. 2 ein Flussdiagramm, das die verschiedenen Schritte einer Auftragsübermittlung zeigt

Die nachfolgende Beschreibung bezieht sich insbesondere auf den speziellen Fall der Durchführung in einem vorzugsweise digital arbeitenden, zellular aufgebauten Mobilfunknetz, das gemäss dem GSM-Standard oder nach dem DCS 1800 Standard definiert ist. Der Fachmann wird jedoch die Erfindung an andere Arten von Telekommunikationsnetzen anpassen können, im speziellen an Telekommunikationsnetze mit Anrufererkennung in einer Betriebszentrale auf dem Weg zwischen dem Anrufer und dem Lieferanten.

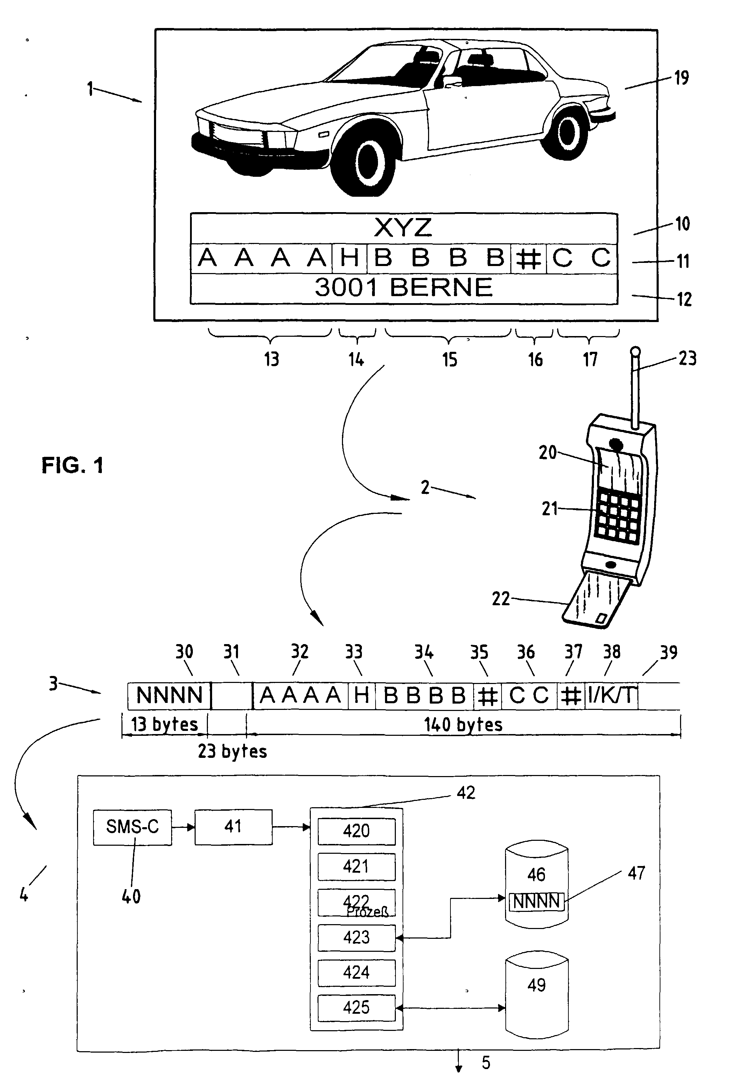

Die Fig. 1 illustriert in schematischer Art und Weise das Prinzip einer Auftragsmeldungsübermittlung gemäss der vorliegenden Erfindung. Mit 1 ist ein Werbeträger, hier zum Beispiel ein Plakat, bezeichnet. Der Werbeträger könnte irgendwelcher Art sein, z.B. ein Prospekt, ein Katalog, ein Inserat in der Presse, ein TV-Werbespot, eine Internet-Seite, ein Fax, eine Aussenwerbung usw. oder, im Falle einer Zahlungstransaktion, eine Rechnung. Neben dem Hauptteil des Werbeträgers, der für die Werbung eines Produkts 19 reserviert ist, beinhaltet der Werbeträger gemäss der Erfindung eine besondere Zone 10, 11, 12, die für die Benützer des Systemes der Erfindung bestimmt ist. Diese Zone beinhaltet z.B. eine Linie 10, mit einem Logo oder einem Namen, und einer Zeile 12 mit z.B. einem Slogan oder den Koordinaten des Telekommunikationsbenützers oder des Internetproviders, die das Telekommunikationsnetz verwalten. Ein Auftragscode 11 ist zwischen diesen beiden Zonen angegeben. Die Aufgabe des Auftragscodes ist es, wie später ersichtlich, die Bestellung des Produkts 19, oder die Informationsanforderung zu diesem Produkt oder eine Zahlungstransaktion zu ermöglichen. Der Auftragscode beinhaltet mehrere Felder, die mit den Bezugszeichen 13 bis 17 bezeichnet sind. Das erste Feld 13 des Auftragscodes enthält eine Bezeichnung des Lieferanten: z.B. einen mnemotechnischen Code, der den Lieferanten des Produkts auf dem Werbeträger anzeigt. Ein zweites Feld 15, das vom Lieferantencode 13 durch einen Feldbegrenzer 14 abgetrennt ist, enthält einen Produktcode, der anzeigt, für welches Produkt die Werbung bestimmt ist. Im Falle einer Zahlungstransaktion versteht man unter dem Begriff "Produkt" das Objekt der Transaktion, z.B. einen Betrag und/oder die Identifikation der vom Abonnenten bezahlten Leistung des Lieferanten. In einer Variante enthält der Auftragscode mehrere Produktcodes. Ein weiteres Feld 17, vom Produktcode 15 durch einen Feldbegrenzer 16 getrennt, enthält eine Checksumme.

Die Felder 13, 15, 17 können eine beliebige Kombination von alphanumerischen Symbolen enthalten. Jedes alphanumerische Symbol kann z.B. 46 verschiedene Werte annehmen - z.B. 26 Buchstaben, 10 Zahlen und 10 weitere verfügbare Symbole auf der Tastatur eines Mobilfunktelefons. Weitere Auswahlen von berechtigten Symbolen können natürlich definiert werden, z.B. dadurch, dass zwischen Gross- und Kleinbuchstaben unterschieden wird. Die Felder 13 und 15 weisen eine variable Länge auf, die gesamte Länge des Auftragscodes ist jedoch z.B. auf 12 Zeichen beschränkt. Bei der einen Variante haben die Felder 13, 15, 17 eine vorbestimmte, fixe Länge: in diesem Fall sind die Feldbegrenzer 14, 16 nicht nötig und können weggelassen werden.

Die Checksumme 17 ist festgelegt durch irgendeinen bekannten Fehlerprüfungs- oder Fehlerkorrektur-Algorithmus aus den Feldern 13, 15 und eventuell 14, 16, 17. Z.B. kann zum Festlegen des Wertes der Checksumme 17 ein Paritätskontrollealgorithmus verwendet werden. Die Anzahl der Zeichen der Checksumme hängt vom benützen Logarithmus und von der maximal akzeptierten Fehlerquote ab.

Der Abonnent im Telekommunikationsnetz, der Informationen anfordern, das Produkt 19 bestellen oder eine Zahlungstransaktion durchführen möchte, kann dies mit seinem Endgerät 2 tun, auf dem er den auf dem Werbeträger angegebenen Auftragscode 11 eingibt. In diesem bevorzugten Beispiel besteht das Endgerät aus einem Mobilfunktelefon, das mit einer Tastatur 21, einer Anzeige 20 und einer Antenne 23 ausgestattet ist. Ein Teilnehmeridentifikationsmodul ist vorhanden, vorzugsweise eine SIM-Karte (Subscriber Identification Modul) 22 in der Ausführung einer Chipkarte. Auf der SIM-Karte sind u.a. alle für die Identifikation des Benützers notwendigen Daten enthalten. Ein Vorteil einer solchen Ausführung liegt darin, dass ein Mobilfunkteilnehmer beispielsweise sein persönliches Endgerät nicht bei sich tragen muss, sondern lediglich seine Chipkarte.

Mit dem Mobilfunktelefon 2 ist es möglich, statt Sprachinformationen Meldungen zu schicken. Diese Möglichkeit ist in der Fachwelt unter einem mit SMS (Short Message Service) benannten Dienst bekannt. Die Verbindung wird dabei stets über eine Zentrale für den Kurzmeldungsdienst 40, ein sogenanntes Short Message Service Center (SMS-C), abgewickelt. Dieses Vorgehen aus der GSM-Phase 2 ist mit dem Standard GSM 3.40 definiert. Die Patentanmeldung W095/35635 im Namen der Anmelderin beschreibt eine Weiterentwicklung dieses Dienstes im Detail.

Der Abonnent kann dann zu seinem Endgerät 2 greifen und den auf dem Werbeträger angegebenen Auftragscode 11 eingeben. In einer bevorzugten Variante wird der Abonnent vom Chipkartenbetriebssystem auf der Chipkarte im Mobilfunktelefon aufgefordert anzugeben, ob er direkt eine Produktbestellung aufgeben oder nur Produktinformationen erhalten möchte, oder ob er eine Zahlungstransaktion durchführen will .

In einer bevorzugten Variante, die speziell auf die Uebermittlung von Zahlungstransaktionen eingestellt ist, gibt der Abonnent nicht den gesamten Auftragscode auf seinem persönlichen Endgerät ein. Mindestens ein Teil des Auftragscodes wird direkt von einem externen Apparat eingelesen und/oder übertragen: Z.B. eine Kasse in einem Ladengeschäft. In diesem Fall müssen Verbindungsmittel zwischen dem Endgerät und dem externen Apparat vorgesehen sein.

Danach wird der Auftragscode wie eine normale GSM-Phase-2-Kurzmeldung übermittelt, dies z.B. mit dem unter 3 in der Figur 1 angegebenen Format. Die Kurzmeldung enthält, gemäss dem Format GSM, einen standardisierten Datenvorsatz (Header) (30, 31), und ein Datentelegramm (32 - 39). Der Datenvorsatz umfasst einen ersten Block 30 von 13 bytes Länge, in welchem eine Abonnentenidentifizierung enthalten ist, die gemäss dem GSM-Standard 4.08 definiert ist. Anschliessend an den genannten ersten Block ist im Datenvorsatz ein zweiter Block 31 vorhanden, welcher eine Länge von 23 bytes aufweist und in welchem spezifische Daten des Short-Message-Service, die gemäss dem GSM-Standard 3.40 definiert sind, enthalten sind. Anschliessend an den Datenvorsatz ist ein standardgemässes Datentelegramm mit 140 bytes vorhanden, das im Wesentlichen die Meldungsdaten 32 - 39 beinhaltet.

Der durch den Abonnenten eingegebene Auftragscode wird im Datentelegramm der Kurzmeldung 3 übermittelt. Das Feld 32 enthält die Lieferanteninformationen, das Feld 33 einen Feldbegrenzer, das Feld 34 die Produktinformation, das Feld 35 einen zweiten Feldbegrenzer, das Feld 36 die Checksumme 36, das Feld 37 einen dritten Feldbegrenzer und das Feld 38 schlussendlich enthält die Angabe, ob es sich um eine Produktbestellung (K), eine Informationsanforderung (I) oder eine Zahlungstransaktion (T) handelt.

Diese Informationsaufteilung in der Auftragskurzmeldung wird nur als Beispiel angegeben, denn andere Aufteilungen sind durchaus denkbar. Ausserdem können die verschiedenen Informationen vermischt oder verschlüsselt werden, um die Vertraulichkeit zu garantieren. Die Informationen können auch, aufgeteilt in verschiedene Kurzmeldungen, aufeinanderfolgend gesandt werden. Ausserdem kann das Datentelegramm einen zusätzlichen, nicht dargestellten Code enthalten, der es der Betriebszentrale ermöglicht zu erkennen, ob die Kurzmeldung wie eine Auftragsmeldung zu behandeln ist. In einer bevorzugten Variante werden die Auftragsmeldungen - dank einer speziell eingerichteten Telefonanrufnummer - automatisch an eine Betriebszentrale übermittelt, die sich den Auftragsmeldungen widmet: in diesem Fall wird kein zusätzlicher Code benötigt.

Die übermittelte Kurzmeldung 3 wird von der Betriebseinheit 4 des GSM-Operators empfangen. Diese enthält ein Verwaltungsmodul für Kurzmeldungen (Short Message Service Center SMS-C) 40. Der SMS-C 40 leitet die vom Endgerät 2 übermittelten Datentelegramme 3 an eine Plattform für SIM-Karte-Anwendungen 41. Die Plattform 41 kann je nach Art der erhaltenen Kurzmeldung 3 eine oder mehrere Anwendungen ausführen. Wenn die Plattform 41 eine Auftragskurzmeldung erkennt, wird die Anwendung 42 ausgeführt. Diese Anwendung 42 ist dazu bestimmt, Auftragskurzmeldungen zu verwalten. Die Anwendung 42 beinhaltet ein Testmodul 420, um den Wert des Bestellungs-/Informations-/Transaktionsfeldes 38 in den erhaltenen Aufträgen zu testen. Ein Modul 421 erlaubt es, die Checksumme anhand mindestens der Felder 32 und 34 der erhaltenen Meldung zu berechnen und diese berechnete Checksumme mit der übermittelten Checksumme 36 zu vergleichen. Ein Modul 422 erlaubt es, die Identität des anrufenden Abonnenten mit Hilfe der Abonnentenidentifizierung im Datenvorsatz zu erkennen. Ein Modul 423 ermöglicht es, in der Abonnentendatenbank 46 die Abonnentenidentifikationsdaten 47 des erkannten Abonnenten zu lesen. Diese Abonnentenidentifikationsdaten enthalten mindestens die vollständige Adresse des Abonnenten. Vorzugsweise enthalten die Identifikationsdaten 47 ebenfalls die Sprache des Abonnenten und seine Bankverbindung bzw. das Kreditkartenunternehmen. Die Abonnentendatenbank 46 ist vorzugsweise die Datenbank des Betreibers des Telekommunikatiorisnetzes für die Verwaltung der Abonnenten. Ihr Inhalt ist im Prinzip also äusserst zuverlässig. In einer Variante enthält die Abonnentendatenbank die Abonnentenidentifikationsdaten nur von den Abonnenten, die das System der Erfindung unterschrieben haben; in diesem Fall ist diese Datenbank durch die Anwendung 42 verwaltet.

Das Modul 424 erlaubt es, zumindest einige der in der vom Abonnenten eingegebenen Kurzmeldung 3 enthaltenen Informationen mit den Abonnentenidentifikationen 47 zu verknüpfen, um die nicht vollständig übermittelte Identifizierung des Abonnenten zu vervollständigen. Das Modul 425 erlaubt das Lesen der Lieferantenidentifikationsdaten in der Lieferantendatenbank 49, die dem im Feld 32 der Kurzmeldung angezeigten Lieferanten entsprechen. Diese Datenbank wurde eigens für die Bedürfnisse der Dienste der Erfindung geschaffen und beinhaltet Identfikationsdaten von allen Lieferanten oder Anbietern, die am System beteiligt sind.

Die Module 420 - 425 können mit Hilfe von logischen Schaltungen, vorzugsweise aber mit Software oder eine Software-Material-Lösung erstellt werden.

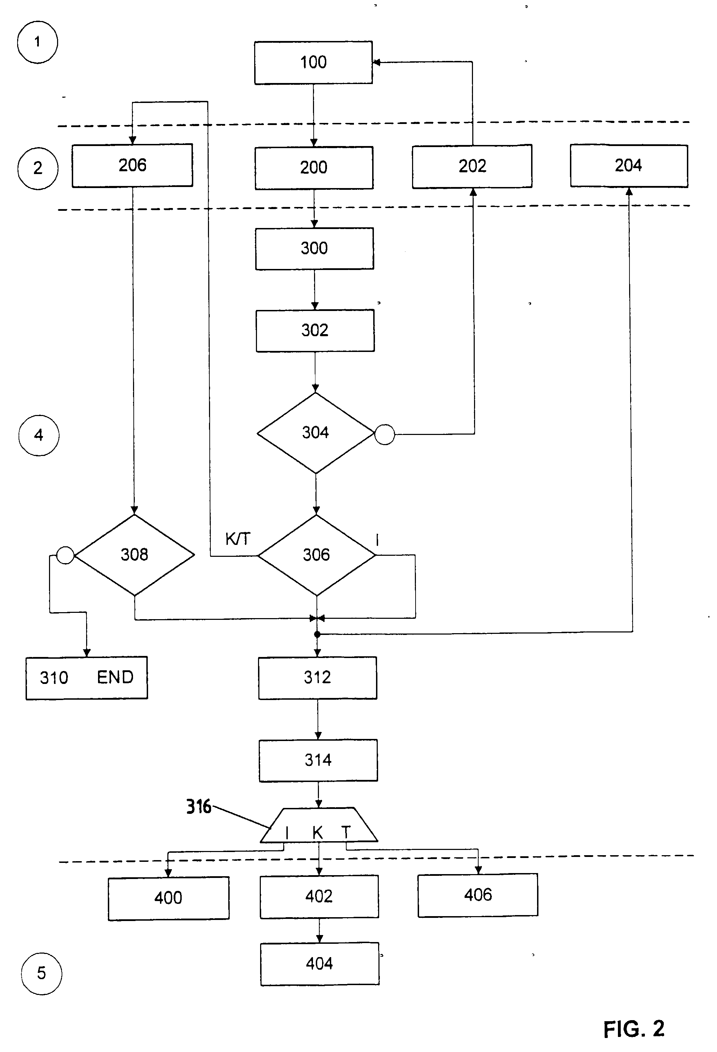

Mit Hilfe des Flussdiagrammes der Figur 2 wird nun das Verfahren zur Uebermittlung von Aufträgen durch ein Telekommunikationsnetz gemäss der vorliegenden Erfindung beschrieben. Die Nummern links der Figur entsprechen den Elementen der Figur 1, die zur Durchführung für den entsprechenden Schritt des Verfahrens am meisten beansprucht werden.

Im Laufe des Schrittes 100 sieht der Abonnent z.B. eine Werbung 1, die einen Auftragscode 11 enthält. Er entscheidet sich dazu, das in der Werbung gerühmte Produkt 19 zu erwerben oder zusätzliche Informationen zu diesem Produkt zu bestellen, oder eine Zahlungstransaktion durchzuführen.

Im Laufe des Schrittes 200 ergreift der Abonnent sein Endgerät, in diesem Beispiel ein Mobilfunktelefon 2, und gibt den Auftragscode 11 auf der Tastatur 21 ein. Ein Softwaremenu kann im Endgerät vorgesehen werden um den Abonnenten während dieser Operation zu leiten. Ausserdem können dem Abonnenten während dieses Schrittes zusätzliche Fragen gestellt werden. Z.B. wenn das Endgerät erkannt hat, dass der Abonnent eine einem Auftrag entsprechende Kurzmeldung eingegeben hat, fragt das Programm beim Abonnenten nach, ob er eine Informationsanforderung, eine Produktbestellung oder eine Zahlungstransaktion auszuführen wünscht. Wie schon erwähnt, können auch andere Mittel eingesetzt werden, um den Auftragscode bzw. die Auftragsmeldung zu erfassen. Z.B. kann mindestens ein Teil von den Informationen 30 - 39 in der Kurzmeldung 3 aus einem externen, mit dem Endgerät 2 verbundenen Gerät, kommen.

Die Auftragsmeldung 3 wird dann wie eine normale Kurzmeldung zur Betriebszentrale 4 übermittelt, wie z.B. im Format in Figur 1 illustriert. Die Betriebszentrale 4 erhält die Auftragskurzmeldung 3 und identifiziert im Laufe des Schrittes 300 den Anrufer mit Hilfe des Datenvorsatzes 30. Andere Methoden der Abonnentenidentifizierung können gemäss dem verwendeten Telekommunikationsnetz vorgesehen werden (A-Nummer-ldentifikation).

Im Laufe des Schrittes 302 berechnen die Mittel zur Berechnung der Checksumme 42 mit Hilfe des vereinbarten Fehlerprüfungsalgorithmus die Checksumme der Felder 32 und 34 der erhaltenen Kurzmeldung. Die erhaltene Kurzmeldung wird danach, im Laufe des Schrittes 304, mit der in der Kurzmeldung übermittelten Checksumme 36 verglichen. Beim Auftreten einer Differenz sendet die Betriebszentrale dem Anrufer eine Fehlermeldung mit der Bitte, den Auftragscode erneut einzugeben (Schritt 202). Die Fehlermeldung kann an das Endgerät geschickt werden, mit dem die Auftragsmeldung 3 geschickt worden ist, oder eventuell an ein anderes Gerät. In einer Variante der Erfindung wird statt dem Fehlerprüfungsalgorithmus ein Fehlerkorrekturalgorithmus benutzt. Wenn hier ein Fehler während des Schrittes 304 entdeckt wird, bestimmt die Betriebszentrale den Auftragscode, der ihr am wahrscheinlichsten erscheint und korrigiert die Fehler in der tatsächlich erhaltenen Meldung. Es ist also nicht nötig, mit dem Schritt 202 fortzufahren.

Im Laufe des Schrittes 306 testen die Mittel 41 den Wert des Feldes 38. Wenn das Feld anzeigt, dass der Kunde direkt eine Produktbestellung oder eine Zahlungstransaktion auszuführen wünscht, wird dem Abonnenten (auf sein Endgerät oder auf ein anderes Gerät) eine Kurzmeldung mit der Aufforderung zur Bestätigung (Schritt 206) gesandt. Vorzugsweise wird hier der Preis geschickt und auf der Anzeige 20 des Endgerätes 2 angezeigt. In diesem Fall wartet die Betriebszentrale auf eine Bestätigungskurzmeldung (Schritt 308). Die Bestellung wird annulliert (Schritt 310), wenn sie bis innerhalb einer vorher festgelegten Frist keine Meldung erhält oder wenn sie eine Annullationskurzmeldungsbestätigung (308) erhalten hat.

Optional wird während des Schrittes 206 auch ein Pin-Code verlangt und der Pin-Code wird während des Schrittes 308 mit dem Pin-Code, der in einer Abonnentendatenbank dem erkannten Abonnenten entspricht, verglichen. Wenn sich der Vergleich als negativ erweist, wird die Verbindung abgebrochen oder der Abonnent wird aufgefordert, eine Korrektur einzusenden.

Im Falle einer Bestätigung der Bestellung oder Zahlungstransaktion, oder wenn der Abonnent angegeben hat, dass er nur eine Informationsanforderung wünscht, sendet die Betriebszentrale vorzugsweise eine Bestätigungskurzmeldung, die auf der Anzeige 20 des Endgerätes 2 ersichtlich wird (Schritt 204). Das System fährt weiter mit dem Schritt 312 fort. Während diesem Schritt werden die während dem Schritt 300 erkannten und dem Abonnenten entsprechenden Abonnentenidentifikationsdaten 47 der Datenbank 46 entnommen. Die der Datenbank 46 entnommenen, zusätzlichen Identifikationsdaten enthalten vorzugsweise alle diejenigen Angaben, die dem Lieferanten erlauben, den Abonnenten, der ihm den Auftrag erteilt hat, gänzlich zu identifizieren und den Auftrag komplett auszuführen. Z.B. können die eingelesenen Identifikationsdaten die gesamte Adresse des Abonnenten, die Korrespondenzsprache des Abonnenten, und, im Falle einer Produktbestellung oder Zahlungstransaktion, eventuell die Bankverbindung und/oder das Kreditkarteninstitut des Abonnenten enthalten. Andere Identifikationsdaten können eventuell die Telefonnummer des Abonnenten, eine zweite Rechnungsadresse etc. enthalten.

Im Laufe des Schrittes 314 werden die der Datenbank 46 entnommenen Abonnentenidentifikationsdaten mit den Daten der erhaltenen Kurzmeldung 3 verknüpft. Die verknüpften Daten enthalten darüberhinaus die Identifizierung 32 und 34 des Lieferanten und des Produkts und eine komplette Identifikation des Abonnenten, der den Auftrag aufgegeben hat.

Im Laufe des Schrittes 316, wird erneut ein Test durchgeführt, um zu überprüfen, ob der Abonnent eine Information, eine Produktbestellung oder eine Zahlungstransaktion ausführen möchte. Im Falle einer Informationsanforderung wird während des Schrittes 400 dem im Feld 32 der Kurzmeldung angezeigten Lieferanten eine Informationsanforderungsmeldung gesandt. Im Falle einer Produktbestellung wird dem Lieferanten während der Etappe 402 eine im Feld 32 der Kurzmeldung angezeigte Produktbestellungsmeldung gesandt. Im Falle einer Zahlungstransaktion wird im Laufe des Schrittes 406 das Konto des Abonnenten beim Telekommunikationsnetzbetreiber automatisch belastet und die Summe wird dem Konto des Lieferanten gutgeschrieben. Der Lieferant erhält dann eine Meldung mit mindestens der gutgeschriebenen Summe und der Identifikation des Abonnenten. Andere Zahlungsmethoden sind denkbar, die auch vom Abonnenten und/oder Lieferanten abhängen können. In diesem Fall enthält die Abonnentendatenbank 46, bzw. die Lieferantendatenbank 49, ein Feld, das die bevorzugten resp. akzeptierten Zahlungsmethoden beinhaltet. Wenn z.B. der Abonnent es wünscht und der Lieferant es akzeptiert, kann die Verrechnungsresp. Zahlungsweise durch Sendung einer Rechnung an den Abonnenten erfolgen.

Die Produktbestellungsmeldung sowie auch die Informationsanforderungsmeldung und die Meldung an den Lieferanten im Falle einer Zahlungstransaktion enthalten Daten, die während des Schrittes 314 verknüpft worden sind.

In einer bevorzugten Variante enthält das Feld 32 der Kurzmeldung einen mnemotechnischen Code, der leicht für den Abonnenten zu merken ist - z.B. den Namen des Lieferanten. Dieser Code erlaubt keine direkte Uebermittlung der entsprechenden Meldung an den Lieferanten. In diesem Fall wird dieser Code mit Hilfe einer Umsetzungstabelle in eine Adresse konvertiert, die die Uebermittlung an den Lieferanten ermöglicht. Die Umsetzungstabelle ist vorzugsweise aus einer Lieferantendatenbank 49, indexiert mit dem Lieferantencode 32, zusammengesetzt. Je nach den für die Uebermittlung ausgesuchten technischen Mitteln zwischen der Betriebszentrale 4 und dem Lieferanten, kann die der Datenbank 49 entnommene Uebermittlungsadresse durch z.B. eine gewöhnliche Postadresse, durch eine Telefon- oder Faxnummer, eine e-mail-Adresse etc. ersetzt werden. Bei der e-mail-Uebermittlung wird z.B. der Lieferantencode 32 in der Kurzmeldung mittels Lieferantendatenbank in eine e-mail-Adresse konvertiert. Die im Schritt 314 verknüpften Daten werden im Laufe der Schritte 400 oder 402 an diese e-mail-Adresse gesandt. In einer Variante gruppiert die Betriebszentrale automatisch alle für einen Lieferanten bestimmten Aufträge während einer vorbestimmten Zeitdauer um. Es ist auch möglich, Aufträge mehrerer, unterschiedlicher Lieferanten an ein Logistiksystem (z.B. eines Lagerhauses, Warenhauses, Speditionsunternehmens u.s.w.) zu senden. Das Logistiksystem verschafft sich dann die Informationen oder Produkt geordnet nach Lieferant, und die Informationen resp. Produkte werden dann verpackt, adressiert und an den Abonnenten versandt.

Im Fall einer Produktbestellung wird im Laufe des Schrittes 404 das Konto des Abonnenten beim Telekommunikationsnetzbetreiber automatisch belastet und die Summe wird dem Konto des Produktlieferanten gutgeschrieben. Andere Zahlungsmethoden, die auch vom Abonnenten und/oder Lieferanten abhängen können, sind auch hier denkbar. In diesem Fall enthält die Abonnentendatenbank 46, bzw. die Lieferantendatenbank 49, ein Feld, das die bevorzugten resp. akzeptierten Zahlungsmethoden beinhaltet. Wenn z.B. der Abonnent es wünscht und der Lieferant es akzeptiert, kann die Verrechnungs- resp. Zahlungsweise durch Sendung einer Rechnung an den Abonnenten erfolgen.

Die vorausgegangene Beschreibung bezieht sich speziell auf den Fall der Benutzung in einem Mobilfunknetz. Die Erfindung kann jedoch bei anderen Netzen ebenfalls eingesetzt werden, z.B. in einem digitalen Fixnetz (UPT) oder in einem Internetnetz: der Internet-Provider kennt ebenfalls zu jeder Zeit die Identität jedes verbundenen Abonnenten. Er besitzt ebenfalls eine Abonnentendatenbank, die für jeden Abonnenten die zur Informations- oder Produktübermittlung nötigen Angaben enthält. Es ist also möglich, die vorliegende Erfindung bei der Produktbestellung oder Informationsanforderung im Internet zur Anwendung zu bringen: der Internetbenutzer sendet, nachdem er den Werbeträger 1 auf einem Auftragscode 11 gesehen hat, eine e-mail-Kurzmeldung an eine vom Provider gelieferte Adresse im Internet. Der Provider befasst sich mit der Sammlung der Aufträge und verknüpft diese mit seinen der Abonnentendatenbank 46 entnommenen Adressen- und Sprachidentifikationsdaten, bevor er sie seinem in der Kurzmeldung angegebenen Lieferanten sendet.

Eine mögliche Anwendung der Erfindung betrifft z.B. die Vermietung von Werbeflächen im Internet, z.B. im Rahmen einer Kleinanzeigenrubrik für Occasionen. Ein bekanntes Problem von Netzen wie dem Internet ist das Fehlen von Mitteln für die sichere und vertrauliche Ausführung von Zahlungen oder Transaktionen. Dieses Problem wird gemäss der vorliegenden Erfindung folgendermassen gelöst:

Der Abonnent, der z.B. sein Auto verkaufen möchte, konsultiert im Internet eine Internetseite mit Kleinanzeigen für Occasionsautos. Auf dieser Internetseite befindet sich eine spezielle Zone, die mit einem Auftragscode 11 versehen ist. Dieser Auftragscode 11 ermöglicht die Anfügung des Inserates. Der Abonnent ergreift also sein Mobilfunktelefon 2, gibt eine Spezialnummer und dann den Auftragscode 11 auf der Tastatur ein. Die Schritte 300 bis 302 laufen wie im besprochenen Fall der Produktbestellung ab, nur dass das Produkt hier eine Werbefläche im Internet ist.

Im Laufe des Schrittes 206 erhält der Abonnent auf seinem Endgerät 2 eine Kurzmeldung mit einer Bestätigungsaufforderung. Vorzugsweise wird dabei der Preis seines Inserates sowie der Name des Betreibers der Internetseite enthalten sein. Eventuell wird während des Schrittes 206 auch ein Pin-Code verlangt. Ausserdem wird der Abonnent aufgefordert einzugeben, mit Hilfe welcher Mittel er den Text seines Inserates eingeben möchte. Der Abonnent hat beispielsweise die Wahl, seinen Text über die Tastatur seines Endgerätes einzugeben, diesen per e-Mail zu übermitteln oder mittels eines per Post oder Telefax geschickten Formulares zu übersenden.

Die folgenden Verfahrensschritte 312 bis 404 laufen in derselben Art und Weise wie bei einer Produktbestellung ab. Im Laufe des Schrittes 402, sobald der Betreiber ("Lieferant") der Internetseite die Mitteilung mit der Adresse des Abonnenten, der das Inserat erscheinen lassen möchte, erhalten hat, kann er - je nach Wahl des Abonnenten - den als Kurzmeldung oder per e-Mail erhaltenen Text lesen oder dem Abonnenten ein Inserateformular zum Ausfüllen per Fax zusenden. Sobald der Lieferant alle nötigen Angaben erhalten hat, kann er das Inserat auf der ausgewählten Werbefläche des Internets veröffentlichen.

Der Rechnungsbetrag für das Inserat wird während des Schrittes 406 auf dem Konto des Abonnenten beim Telekommunikationsnetzbetreiber erhoben und wird dem Lieferanten (Internetseitenbetreiber) überwiesen. Vorzugsweise wird der Inseratenpreis periodisch erhoben, z.B. mit der Monatsrechnung vom Telekommunikationsnetzbetreiber, solange der Abonnent nicht irgendwie mitteilt, dass er die Erscheinung des Inserates einstellen möchte. In letzterem Fall sendet der Lieferant dem Telekommunikationsnetzbetreiber eine Meldung für den Abbruch der periodischen Zahlungen. Diese Meldung kann zusammen mit anderen Meldungen des gleichen Typs geschickt werden. Der Versand kann z.B. wöchentlich oder monatlich in Form einer wiedereinlesbaren CD-Rom (CDR) durchgeführt werden.

Der Fachmann wird verstehen, dass im Laufe des Schrittes 206 statt nur einer Kurzmeldung zur Bestätigungsaufforderung oder Aufforderung zur Eingabe des Pin-Codes auch ein kompletter Dialog stattfinden kann. Je nach Anwendung können während diesem Verfahrensschritt eine Vielzahl von Informationen und Befehlen zwischen der Betriebszentrale 4 und dem Abonnenten ausgetauscht werden. Im Falle der Benutzung in einem Telefonnetz können diese im Schritt 206 ausgetauschten Informationen auch mündlich ausgetauscht werden. In diesem Fall muss ein Sprachserver in der Betriebszentrale 4 enthalten sein.

Der Fachmann wird verstehen, dass sich die vorliegende Erfindung auch auf andere Arten von Telekommunikationsnetzen anwenden lässt, die von einem Operator betrieben werden, der fähig ist, automatisch die Identität des anrufenden Abonnenten zu erkennen und der eine Abonnentendatenbank bereitstellt, die genügend Parameter zur Verfügung stellt, um eine Uebermittlung von Produkten oder Informationen an den Abonnenten zu erlauben.

## Patentansprüche

1. Verfahren zur Übermittlung von Aufträgen in einem Telekommunikationsnetz, insbesondere zur Übermittlung von Produktbestellungen, Informationsanforderungen oder Zahlungstransaktionen, zwischen einer Vielzahl von Abonnenten am Telekommunikationsnetz und mindestens einem Lieferanten, wobei Abonnenten automatisch durch eine Betriebseinheit (4) erkannt werden (300), gekennzeichnet durch folgende Schritte, die für jede Auftragsübermittlung durchgeführt werden:
Übermittlung durch das Telekommunikationsnetz (200) einer von dem Abonnenten verfassten Kurzmeldung (3), wobei die Kurzmeldung (3) eine Abonnentenidentifizierung (30) enthält, mittels welcher Abonnentenidentifizierung (30) die Betriebseinheit (4) den Abonnenten erkennt, und wobei die Kurzmeldung einen Datenvorsatz (30-31) und ein Datentelegramm enthält, wobei das Datentelegramm mindestens eine Produktinformation (34) und eine Lieferanteninformation (32) enthält,
Lesen (312) von Abonnentenidentifikationsdaten (47) aus einer Telekommunikationsnetzabonnenten-Datenbank (46), wobei die Abonnentenidentifikationsdaten mindestens die Adresse der Abonnenten enthalten,
Verknüpfen (314) von mindestens einigen in der vom Abonnenten verfassten Kurzmeldung (3) enthaltenen Daten mit den genannten Abonnentenidentifikationsdaten (47),
Übermittlung (400, 402, 406) von den verknüpften Daten (5) an den Lieferanten.

2. Verfahren gemäss Anspruch 1, dadurch gekennzeichnet, dass die genannte, von dem Abonnenten verfasste und durch das Telekommunikationsnetz (200) übermittelte Kurzmeldung (3), ausserdem ein Feld (38) enthält, das von der Art des Auftrages, zum Beispiel Informationsanforderung (I), Produktbestellung (K) oder Zahlungstransaktion (T), abhängt.

3. Verfahren nach dem vorhergehenden Anspruch, dadurch gekennzeichnet, dass, wenn das genannte Feld (38) eine Zahlungstransaktionsinformation oder Produktbestellungsinformation enthält, die Betriebseinheit (4) dem Abonnenten eine Bestätigungskurzmeldung (206) durch das Telekommunikationsnetz sendet und dass das Verfahren unterbrochen wird (310), wenn die Betriebseinheit (4) keine Antwort erhält oder wenn sie eine Kurzmeldung zur Annullierung der Transaktion bzw. Bestellung enthält.

4. Verfahren nach dem vorhergehenden Anspruch, dadurch gekennzeichnet, dass eine Preisindikation in der Bestätigungskurzmeldung (206) enthalten ist.

5. Verfahren nach einem der vorhergehenden Ansprüche, dadurch gekennzeichnet, dass die genannte, durch den Abonnenten eingegebene und durch das Telekommunikationsnetz übermittelte Kurzmeldung (3), ausserdem eine Checksumme (36) enthält, und dass das Verfahren ausserdem die folgenden Schritte enthält:
Berechnung der Checksumme (302) aus mindestens gewissen Teilen der erhaltenen Kurzmeldung,
Vergleich der berechneten Checksumme (304) mit der übermittelten Checksumme (36),
wenn sich der Vergleich als negativ erweist, Verbindungsabbruch oder Sendung (202) einer Kurzmeldung an den Abonnenten durch das Telekommunikationsnetz zur Aufforderung einer Korrektur.

6. Verfahren nach einem der vorhergehenden Ansprüche, dadurch gekennzeichnet, dass der Abonnent aufgefordert wird (206) einen Pin-Code einzugeben, und dass die Verbindung abgebrochen oder eine Kurzmeldung an den Abonnenten mit der Aufforderung zu einer Korrektur gesandt wird, wenn der eingegebene Pin-Code falsch ist.

7. Verfahren nach einem der vorhergehenden Ansprüche, dadurch gekennzeichnet, dass das Verfahren des weiteren einen Leseschritt in einer Lieferantendatenbank (49) von Identifikationsdaten des in der Kurzmeldung angezeigten Lieferanten enthält, dass die genannten Lieferantenidentifikationsdaten mindestens die Adresse des Lieferanten enthalten, und dass die genannten verknüpften Daten an die genannte Adresse des Lieferanten übermittelt werden.

8. Verfahren nach einem der vorhergehenden Ansprüche, dadurch gekennzeichnet, dass das genannte Telekommunikationsnetz ein Mobilfunknetz ist, dass die genannten Kurzmeldungen mindestens einen Datenvorsatz (30, 31) und ein Datentelegramm (32-39) enthalten, dass in der vom Abonnenten eingegebenen Kurzmeldung (3), die eine Produktinformation und eine Lieferanteninformation umfasst, die genannte Produktinformation und Lieferanteninformation im Datentelegramm enthalten sind, dass der Datenvorsatz die genannte Abonnentenidentifizierung (30) enthält, und dass die Betriebseinheit (4) den Abonnenten mittels des genannten Datenvorsatzes identifiziert.

9. Verfahren nach dem vorhergehenden Anspruch, dadurch gekennzeichnet, dass das Mobilfunknetz nach dem GSM-Standard arbeitet, und dass die Abonnentenidentifizierung im Datenvorsatz gemäss GSM-Standard 4.08 oder gemäss einem darauf basierenden, erweiterten Standard definiert ist.

10. Verfahren nach einem der vorhergehenden Ansprüche, dadurch gekennzeichnet, dass die genannten Abonnentenidentifikationsdaten mindestens die Adresse und die Sprache des Abonnenten enthalten.

11. Verfahren nach einem der Ansprüche 1 bis 7, dadurch gekennzeichnet, dass das Telekommunikationsnetz ein Internetnetz ist, dass die Kurzmeldungen e-mail-Meldungen sind, und dass die Abonnentendatenbank auf einem Internetserver gelagert ist.

12. Übermittlungssystem von Aufträgen, insbesondere von Produktbestellungen, Informationsanforderungen oder Zahlungstransaktionen, durch ein Telekommunikationsnetz, zwischen einer Vielzahl von Abonnenten im Telekommunikationsnetz und mindestens einem Lieferanten, wobei das Übermittlungssystem automatische Erkennungsmittel (422) zur Erkennung von Abonnenten umfasst, und wobei das Übermittlungssystem eine Abonnentendatenbank (46) umfasst, die für jeden Abonnenten im Telekommunikationsnetz Abonnentenidentifikationsdaten (47) enthält, wobei die genannten Abonnentenidentifikationsdaten mindestens eine Adresse des Abonnenten enthalten, dadurch gekennzeichnet, dass es zusätzlich folgende Elemente enthält:
eine Betriebseinheit (4), die das Empfangen von von Abonnenten verfassten und durch das Telekommunikationsnetz übermittelten Kurzmeldungen (3) erlaubt, wobei die genannten Kurzmeldungen (3) jeweils eine Abonnentenidentifizierung (30) enthalten, mittels welcher Abonnentenidentifizierung (30) die Betriebseinheit (4) den Abonnenten erkennt, und wobei die genannten Kurzmeldungen einen Datenvorsatz (30-31) und ein Datentelegramm enthalten, wobei das Datentelegramm mindestens eine Produktinformation (34) und eine Lieferanteninformation (32) enthält,
Lesemittel (423) zum Lesen von den genannten Abonnentenidentifikationsdaten (47) in der genannten Abonnentendatenbank (46)
Verknüpfungsmittel (424) zum Verknüpfen von mindestens gewissen Informationen aus der Kurzmeldung (3), mit den genannten Abonnentenidentifikationsdaten (47),
Übermittlungsmittel zur Übermittlung von den verknüpften Daten (5) an den Lieferanten.

13. System nach dem vorhergehenden Anspruch, dadurch gekennzeichnet, dass die vom Abonnenten eingegebene und durch das Telekommunikationsnetz übermittelte genannte Kurzmeldung (3) ausserdem ein Feld (38) enthält, das von der Art des Auftrages, z.B. einer Informationsanforderung, Produktbestellung oder einer Zahlungstransaktion, abhängt, wobei das genannte System ausserdem Mittel (420) zur Prüfung dieses Feldes enthält.

14. System nach einem der Ansprüche 12 oder 13, dadurch gekennzeichnet, dass die genannte, durch den Abonnenten eingegebene und durch das Telekommunikationsnetz übermittelte Kurzmeldung (3), ausserdem eine Checksumme (36) enthält und dass das System ausserdem Mittel (421) zur Berechnung der Checksumme aus mindestens gewissen Teilen der erhaltenen Kurzmeldung (3) und zum Vergleich der berechneten Checksumme mit der erhaltenen Checksumme (36) enthält.

15. System nach einem der Ansprüche 12 bis 14, dadurch gekennzeichnet, dass das System eine Lieferantendatenbank (49) enthält, die für jeden Lieferanten Lieferantenidentifikationsdaten enthält, wobei die genannten Lieferantenidentifkationsdaten mindestens eine Lieferantenadresse enthalten, und dass die genannten verknüpften Daten (5) an die genannte Adresse des Lieferanten übermittelt werden.

16. System nach einem der Ansprüche 12 bis 15, dadurch gekennzeichnet, dass das genannte Telekommunikationsnetz durch ein Mobilfunknetz gebildet ist, dass die genannten Kurzmeldungen (3) mindestens einen Datenvorsatz (30,31) und ein Datentelegramm (32-39) enthalten, dass die durch den Abonnenten eingegebene genannte Kurzmeldung (3) mindestens eine Produktinformation (34) und eine Lieferanteninformation (32) enthält, dass die genannte Produktinformation (34) und Lieferanteninformation (32) im Datentelegramm enthalten ist, dass der Datenvorsatz die genannte Abonnentenidentifizierung (30) enthält und dass die Betriebseinheit (4) den Abonnenten mittels des genannten Datenvorsatzes identifiziert.

17. System nach dem vorhergehenden Anspruch, dadurch gekennzeichnet, dass das genannte Mobilfunknetz nach dem GSM-Standard arbeitet, und dass die Identifizierung des Abonnenten im Datenvorsatz gemäss GSM-Standard 4.08 oder gemäss einem darauf basierenden, erweiterten Standard definiert ist.

18. System nach einem der Ansprüche 12 bis 17, dadurch gekennzeichnet, dass die genannten Abonnentenidentifikationsdaten (47) mindestens die Adresse und die Sprache des Abonnenten enthalten.

19. System nach einem der Ansprüche 12 bis 15, dadurch gekennzeichnet, dass das Telekommunikationsnetz durch ein Internetnetz gebildet ist, und dass die genannten Kurzmeldungen e-mail-Meldungen sind.

## Claims

1. Method for the transmission of orders in a telecommunications network, particularly, the transmission of product orders, information requests, or payment transactions among a multitude of subscribers in the telecommunications network and at least one supplier, subscribers being recognised automatically (300) through an operations centre (4), characterised by the following steps, which are executed for each transmission of an order:
transmission through the telecommunications network (200) of a short message (3), entered by the subscriber, the short message (3) containing a subscriber identification (30) by means of which subscriber identification (30) the operations centre (4) recognises the subscriber, and the short message containing a header (30-31) and a data telegram, the data telegram containing at least one piece of product information (34) and one piece of supplier information (32),
reading (312) of subscriber identification data (47) from a telecommunications network's subscriber database (46), the subscriber identification data containing at least the subscriber address,
linking (314) of at least some of the data contained in the short message (3), entered by the subscriber, to the said subscriber identification data (47),
transmission (400, 402, 406) of the linked data (5) to the supplier.

2. Method according to claim 1, characterised in that said short message (3), entered by the subscriber and transmitted through the telecommunications network (200), further contains a field (38) which depends on the type of order, for instance, information request (I), product order (K), or payment transaction (T).

3. Method according to the preceding claim, characterised in that if said field (38) contains a piece of payment transaction information or product order information, the operations centre (4) sends a confirmation short message (206) to the subscriber through the telecommunications network and in that the procedure is interrupted (310) if the operations centre (4) does not receive a response or if it receives a short message for cancellation of the transaction or the order, respectively.

4. Method according to the preceding claim, characterised in that a price indication is contained in the confirmation short message (206).

5. Method according to one of the preceding claims, characterised in that said short message (3), entered by the subscriber and transmitted through the telecommunications network, further contains a check sum (36), and in that the method further includes the following steps:
calculation of the check sum (302) from at least certain portions of the received short message,
comparison of the calculated check sum (304) with the transmitted check sum (36),
if the comparison turns out to be negative, termination of the connection or sending (202) of a short message to the subscriber through the telecommunications network, requesting a correction.

6. Method according to one of the preceding claims, characterised in that the subscriber is requested (206) to enter a pin-code and in that, if the pin-code is incorrect, the connection is terminated or a short message, with the request for correction, is sent to the subscriber.

7. Method according to one of the preceding claims, characterised in that it further includes a step of reading in a supplier database (49) identification data for the supplier indicated in the short message, in that the said supplier identification data contain at least the address of the supplier, and in that the said linked data are transmitted to the said address of the supplier.

8. Method according to one of the preceding claims, characterised in that the said telecommunications network is a mobile radio network, in that the said short messages contain at least a header (30,31) and a data telegram (32-39), in that in the short message (3), entered by the subscriber, which comprises a piece of product information and a piece of supplier information, the said product information and supplier information are contained in the data telegram, in that the header contains the said subscriber identification (30), and in that the operations centre (4) identifies the subscriber by means of said header.

9. Method according to the preceding claim, characterised in that the mobile radio network operates according to the GSM Standard, and in that the subscriber identification in the header is defined according to GSM Standard 4.08 or according to an extended standard based thereon.

10. Method according to one of the preceding claims, characterised in that the said subscriber identification data contain at least the address and the language of the subscriber.

11. Method according to one of the claims 1 to 7, characterised in that the telecommunications network is an Internet network, in that the short messages are e-mail messages, and in that the subscriber database is located on an Internet server.

12. System for transmission of orders, particularly of product orders, information requests or payment transactions through a telecommunications network, between a multitude of subscribers in the telecommunications network and at least one supplier, the transmission system comprising automatic recognition means (422) for recognition of subscribers, and the transmission system comprising a subscriber database (46), which contains subscriber identification data (47) for each subscriber in the telecommunications network, the said subscriber identification data containing at least an address for the subscriber, characterised in that it further contains the following elements:
reading means (423) to read the said subscriber identification information (47) in the said subscriber database (46),
linking means (424) to link at least certain information from the short message (3) to the said subscriber identification data (47),
transmission means to transmit the linked data (5) to the supplier.

13. System according to the preceding claim, characterised in that the said short message (3), entered by the subscriber and transmitted through the telecommunications network, further contains a field (38) which depends on the type of order, for instance, information request, product order, or payment transaction, the said system including means (420) for checking this field.

14. System according to one of the claims 12 or 13, characterised in that said short message (3), entered by the subscriber and transmitted through the telecommunications network, further contains a check sum (36), and in that the system further includes means (421) for calculating the check sum from at least certain portions of the received short message (3) and for comparing the calculated check sum with the received check sum (36).

15. System according to one of the claims 12 to 14, characterised in that the system includes a supplier database (49) which contains supplier identification data for each supplier, the said supplier identification data containing at least a supplier address, and in that the said linked data (5) are transmitted to the said address of the supplier.

16. System according to one of the claims 12 to 15, characterised in that the said telecommunications network is constituted by a mobile radio network, in that the said short messages (3) contain at least a header (30,31) and a data telegram (32-39), in that the said short message (3), entered by the subscriber, contains a piece of product information (34) and a piece of supplier information (32), in that the said product information (34) and supplier information (32) are contained in the data telegram, in that the header contains the said subscriber identification (30), and in that the operations centre (4) identifies the subscriber by means of said header.

17. System according to the preceding claim, characterised in that the said mobile radio network operates according to the GSM Standard, and in that the subscriber identification in the header is defined according to GSM Standard 4.08 or according to an extended standard based thereon.

18. System according to one of the claims 12 to 17, characterised in that the said subscriber identification data (47) contain at least the address and the language of the subscriber.

19. System according to one of the claims 12 to 15, characterised in that the telecommunications network is constituted by an Internet network, and in that the short messages are e-mail messages.

## Revendications

1. Procédé de transmission d'ordres dans un réseau de télécommunications, en particulier pour transmettre des commandes de produits, des demandes de renseignements ou des transactions de paiements, entre de nombreux abonnés du réseau de télécommunications et au moins un fournisseur, les abonnés étant reconnus (300) automatiquement par une unité fonctionnelle (4), caractérisé par les opérations successives suivantes, qui sont exécutées pour chaque transmission d'ordre :
transmission, par le réseau de télécommunications (200), d'un message court (3) rédigé par l'abonné, ce message court (3) comportant une identification de l'abonné (30), identification de l'abonné (30) au moyen de laquelle l'unité fonctionnelle (4) reconnaît l'abonné, le message court comportant une étiquette (30-31) et un télégramme de données, ce télégramme de données comportant au moins un renseignement sur le produit (34) et un renseignement sur le fournisseur (32),
lecture (312) de données d'identification des abonnés (47) en provenance d'une banque de données sur les abonnés au réseau de télécommunications (46), ces données d'identification des abonnés comportant au moins l'adresse des abonnés,
association (314) d'au moins quelques-unes des données contenues dans le message court (3) rédigé par l'abonné aux données d'identification de l'abonné (47), déjà mentionnées,
transmission (400, 402, 406) des données associées (5) au fournisseur.

2. Procédé selon la première revendication, caractérisé en ce que le message court (3) mentionné, rédigé par l'abonné et transmis par le réseau de télécommunications (200), comporte en outre une plage (38) qui est fonction du genre d'ordre dont il s'agit, par exemple une demande de renseignement (I), une commande de produits (K) ou une transaction de paiement (T).

3. Procédé selon la revendication précédente, caractérisé en ce que, lorsque la plage mentionnée (38) comporte des renseignements sur une transaction de paiement ou des renseignements sur une commande de produit, l'unité fonctionnelle (4) envoie à l'abonné, par le réseau de télécommunications, un message court de confirmation (206), et en ce que le procédé est interrompu (310) si l'unité fonctionnelle (4) ne reçoit pas de réponse ou qu'elle reçoive un message court destiné à annuler la transaction ou la commande.

4. Procédé selon la revendication précédente, caractérisé en ce que le message court de confirmation (206) comporte une indication du prix.

5. Procédé selon l'une des revendications précédentes, caractérisé en ce que le message court (3) mentionné, envoyé par l'abonné et transmis par le réseau de télécommunications, comporte en outre une somme de contrôle (36), et en ce que le procédé comporte en outre les opérations suivantes :
calcul de la somme de contrôle (302) à partir d'au moins certaines parties du message court reçu,
comparaison entre la somme de contrôle calculée (304) et la somme de contrôle transmise (36),
si cette comparaison se révèle négative, coupure de la communication ou envoi (202) d'un message court à l'abonné par le réseau de télécommunications pour l'inviter à corriger.

6. Procédé selon l'une des revendications précédentes, caractérisé en ce que l'abonné est invité (206) à taper un numéro d'identification personnel, et en ce que la communication est coupée ou qu'un message court est envoyé à l'abonné, l'invitant à corriger, si le numéro d'identification personnel qu'il a tapé est erroné.

7. Procédé selon l'une des revendications précédentes, caractérisé en ce qu'il comporte en outre une opération de lecture, dans une banque de données du fournisseur (49), de données d'identification du fournisseur indiqué dans le message court, en ce que ces données d'identification du fournisseur contiennent au moins l'adresse du fournisseur, et en ce que les données associées qui ont été mentionnées sont envoyées à l'adresse du fournisseur qui a été indiquée.

8. Procédé selon l'une des revendications précédentes, caractérisé en ce que le réseau de télécommunications mentionné est un réseau radio mobile, en ce que les messages courts mentionnés comportent au moins une étiquette (30, 31) et un télégramme de données (32-39), en ce que, dans le message court (3) introduit par l'abonné, et qui comporte un renseignement sur le produit et un renseignement sur le fournisseur, ce renseignement sur le produit et ce renseignement sur le fournisseur sont contenus dans le télégramme de données, en ce que l'étiquette contient l'identification d'abonné (30) mentionnée et en ce que l'unité fonctionnelle (4) identifie l'abonné au moyen de l'étiquette mentionnée.

9. Procédé selon la revendication précédente, caractérisé en ce que le réseau radio mobile fonctionne conformément à la norme GSM et en ce que l'identification de l'abonné est définie dans l'étiquette conformément à la norme GSM 4.08 ou à une norme étendue fondée sur celle-ci.

10. Procédé selon l'une des revendications précédentes, caractérisé en ce que les données mentionnées d'identification de l'abonné comprennent au moins l'adresse et la langue de l'abonné.

11. Procédé selon l'une des revendications 1 à 7, caractérisé en ce que le réseau de télécommunications est un réseau Internet, en ce que les messages courts (3) sont des messages électroniques (courriels ou e-mails) et que la banque de données des abonnés est logée dans un serveur d'lnternet.

12. Système de transmission d'ordres, en particulier pour les commandes de produits, les demandes de renseignements ou les transactions de paiement, par un réseau de télécommunications, entre un grand nombre d'abonnés dans ce réseau de télécommunications et au moins un fournisseur, le système de transmission comprenant des moyens de reconnaissance automatiques (422) servant à reconnaître les abonnés, et le système de transmission comprenant une banque de données des abonnés (46), qui contient, pour chaque abonné du réseau de télécommunications, des données d'identification d'abonné (47), les données mentionnées d'identification d'abonné contenant au moins une adresse de l'abonné, caractérisé en ce qu'il comprend en outre les éléments suivants :
une unité fonctionnelle (4) permettant la réception de messages courts (3) rédigés par des abonnés et transmis par le réseau de télécommunications, ces messages courts (3) comportant chacun une identification de l'abonné (30), identification de l'abonné (30) au moyen de laquelle l'unité fonctionnelle (4) reconnaît l'abonné, et les messages courts en question comportant une étiquette (30-31) et un télégramme de données, le télégramme de données comportant au moins un renseignement sur le produit (34) et un renseignement sur le fournisseur (32),
des moyens de lecture (423) servant à lire les données mentionnées d'identification de l'abonné (47) dans la banque de données sur les abonnés qui a été mentionnée (46),
des moyens (424) permettant d'associer au moins certains renseignements provenant du message court (3) aux données mentionnées d'identification de l'abonné (47),
des moyens de transmission des données associées (5) au fournisseur.

13. Système selon la revendication précédente, caractérisé en ce que le message court (3) mentionné, émis par l'abonné et transmis par le réseau de télécommunications, comporte en outre une plage (38) qui est fonction du genre d'ordre donné, par exemple une demande de renseignement, une commande de produit ou une transaction de paiement, le système en question comportant en outre des moyens (420) de vérification de cette plage.

14. Système selon la revendication 12 ou 13, caractérisé en ce que le message court (3) mentionné, émis par l'abonné et transmis par le réseau de télécommunications, comporte en outre une somme de contrôle (36), et en ce que le système comprend aussi des moyens (421) permettant de calculer la somme de contrôle à partir d'au moins certaines parties du message court (3) reçu, et servant à comparer la somme de contrôle calculée à la somme de contrôle reçue (36).

15. Système selon l'une des revendications 12 à 14, caractérisé en ce qu'il comporte une banque de données sur les fournisseurs (49), banque qui contient, pour chaque fournisseur, des données d'identification du fournisseur, ces données d'identification du fournisseur comprenant au moins une adresse de fournisseur, et en ce que les données associées précitées (5) sont transmises à l'adresse indiquée du fournisseur.

16. Système selon l'une des revendications 12 à 15, caractérisé en ce que le réseau de télécommunications mentionné est constitué par un réseau radio mobile, en ce que les messages courts (3) en question comportent au moins une étiquette (30, 31) et un télégramme de données (32-39), en ce que le message court (3) envoyé par l'abonné contient au moins un renseignement sur le produit (34) et un renseignement sur le fournisseur (32), en ce que le renseignement précité sur le produit (34) et le renseignement précité sur le fournisseur (32) sont contenus dans le télégramme de données, en ce que l'étiquette contient l'identification mentionnée de l'abonné (30), et que l'unité fonctionnelle (4) identifie l'abonné au moyen de l'étiquette de données mentionnée.

17. Système selon la revendication précédente, caractérisé en ce que le réseau radio mobile mentionné fonctionne selon la norme GSM et en ce que l'identification de l'abonné dans l'étiquette de données est définie selon la norme GSM 4.08 ou selon une norme élargie qui est fondée sur celle-ci.

18. Système selon l'une des revendications 12 à 17, caractérisé en ce que les données mentionnées d'identification de l'abonné (47) comprennent au moins l'adresse et la langue de l'abonné.

19. Système selon l'une des revendications 12 à 15, caractérisé en ce que le réseau de télécommunications est constitué par un réseau Internet et en ce que les messages courts (3) mentionnés sont des messages électroniques (courriels ou e-mails).
